# EUROPÄISCHE PATENTANMELDUNG

(11) **EP 0 686 531 A1**
(43) Veröffentlichungstag der Anmeldung: **13.12.1995**
(21) Anmeldenummer: 95105678.7
(22) Anmeldetag: 14.04.1995
(51) Int. Cl.: B60R 21/22

(54) **Gassack-Aufprallschutz-Einrichtung**

(30) Priorität: 07.06.1994 DE 4419817
(71) Anmelder: PARS Passive Rückhaltesysteme GmbH, 63755 Alzenau (DE)
(72) Erfinder: Fahrländer, Dieter, D-63755 Alzenau (DE)
(74) Vertreter: Rieger, Harald, Dr.

(57) **Zusammenfassung**

Bei einer Gassack-Aufprallschutz-Einrichtung für die Seitenstruktur eines Kraftfahrzeugs zum Schutz gegen einen dynamischen Seitenaufprall liegt deren Gassack (11) im aufgeblasenen Zustand in dem von der Seitenstruktur (3) und dem Thorax-Bereich des unmittelbar benachbart sitzenden Fahrzeuginsassen gebildeten Zwischenraum. Zur Verbesserung der Montagefreundlichkeit besitzt die mit dem Innenblech (8) der Seitenstruktur verbundene Innenverkleidung (2) eine hutförmig nach außen ausgeformte, den eingefalteten Gassack (11) enthaltende Vertiefung (10) mit in deren Boden angebrachter Gaseintrittsöffnung (17), die mit dem Gasgenerator (18) in Verbindung steht.

## Beschreibung

Die Erfindung betrifft eine Gassack-Aufprallschutz-Einrichtung nach den Merkmalen des Oberbegriffs des Anspruchs 1.

Obwohl der Seitenaufprall von Kraftfahrzeugen nur 20 % aller Unfälle ausmacht, gehört der Seitenaufprall zu den Unfallarten mit den schwersten Verletzungen. Um die Gefahr schwerer und tödlicher Verletzungen von Insassen von Personenkraftwagen bei einem Seitenaufprall zu reduzieren, werden gemäß US-Standard Nr. 214 (FMVSS 214) seit September 1993 bestimmte Anforderungen an die Aufpralleigenschaften von Personenkraftwagen - ausgedrückt in Beschleunigungswerten - gestellt. So darf jeder Personenkraftwagen bei einem Seitenaufprall mittels einer mit einer Geschwindigkeit von 53,9 km/h bewegten, verformbaren, unter einem Winkel von 63° auf den Personenkraftwagen auftreffenden Barriere für den Insassen die Seitenbeschleunigung des Brustkorbs von 85 g für Personenkraftwagen mit vier Seitentüren und 90 g für Personenkraftwagen mit zwei Seitentüren und die Beschleunigung des Beckens von 130 g nicht überschreiten. Zur Erhöhung der passiven Sicherheit ist in der DE-C-3 422 263 eine Sicherheitseinrichtung zum Schutz von Fahrzeuginsassen gegen einen Seitenaufprall beschrieben, bei der über die Deformation der Karosserie ein in der Seitenwand des Fahrzeugs angeordneter Gasgenerator einen im seitlichen Dachraum des Fahrzeugs befindlichen Gassack aufbläst. Die GB-A-2 220 620, DE-A-4 223 620 und DE-A-4 301 193 zeigen eine in der Seitentür eines Kraftfahrzeugs untergebrachte Gassack-Aufprallschutz-Einheit. Im Falle eines Seitenaufpralls soll der sich aufblasende Gassack zwischen den Fahrzeuginsassen und die benachbarte Seitenwand des Fahrzeugs schieben. Die DE-A-4 119 788 befaßt sich mit einer Gassack-Aufprallschutz-Einheit, die in einem verkleideten Seitenteil des Kraftfahrzeugs angeordnet ist und die aus einem hinter der Seitenteilverkleidung angebrachten aufblasbaren Schutzkissen besteht. Ein das Schutzkissen in der Ausgangslage abdeckender Bereich der Seitenverkleidung ist in Richtung Fahrzeuginnenraum zur Bildung einer Öffnung für den Durchtritt eines Teils des sich beim Aufblasen ausdehnenden Schutzkissens um einen spitzen Winkel herausschwenkbar. Das Schutzkissen ist an einem an die Gaszufuhröffnung anschließenden Bereich teilentfaltet angebracht. Bei der in der DE-A-4 223 620 dargestellten Gassack-Aufprallschutz-Einheit sind ein Gasgenerator und der damit verbundene aufblasbare Gassack an einer Stelle innerhalb des Fahrzeugkörpers seitlich von dem Fahrzeuginsassen angeordnet. Der Gasstrom ist nach oben in den Gassack gerichtet, so daß der Gassack nach oben aufgeblasen wird und einen Raum zwischen dem Fahrzeuginsassen und der dem Fahrzeuginsassen benachbarten Seitenstruktur des Kraftfahrzeugs ausfüllt. Schließlich ist in der DE-A-4 210 562 eine Vorrichtung für den Schutz von Insassen eines Kraftfahrzeugs bei einem Seitenaufprall dargestellt, die aus einer Mehrzahl im aktivierten Zustand länglicher, sich parallel zueinander im wesentlichen in einer gemeinsamen Vertikalebene erstreckender Airbags besteht, die an nebeneinander liegenden Enden mit individuellen, gleichzeitig zündenden Gasgeneratoren verbunden sind, die im wesentlichen nebeneinander im Fahrzeug- oder Sitzaufbau untergebracht sind. Die im vorstehenden Stand der Technik beschriebenen Airbag-Einheiten zum Schutz gegen einen dynamischen Seitenaufprall sind hinter der Innenverkleidung der Seitenstruktur des Kraftfahrzeugs angebracht, so daß der sich entfaltende Gassack nur durch eine entsprechende Durchbrechung der Innenverkleidung in den Insassenraum austreten kann, wobei die Gefahr besteht, daß die Innenverkleidung sich aus ihren Befestigungen löst.

Es ist die Aufgabe der vorliegenden Erfindung, die Innenverkleidung der Seitenstruktur des Kraftfahrzeugs mit den Funktionselementen einer Gassack-Aufprallschutz-Einrichtung zu einer fertigungsgerechten und montagegerechten Baugruppe mit montagegerechter Gestaltung der Fügestellen und Fügeteile zu vereinen. Darüber hinaus soll beim Aufblasen des Gassacks verhindert werden, daß durch die entstehenden Reaktionskräfte die Innenverkleidung von ihren Befestigungen abgerissen wird.

Die Lösung dieser Aufgabe erfolgt durch die Merkmale des Anspruchs 1.

In den Unteransprüchen 2 bis 9 sind weitere Ausgestaltungen der Gassack-Aufprallschutz-Einrichtung beschrieben. Der Unteranspruch 10 befaßt sich mit einer Abwandlung der Gassack-Aufprallschutz-Einrichtung nach Anspruch 1.

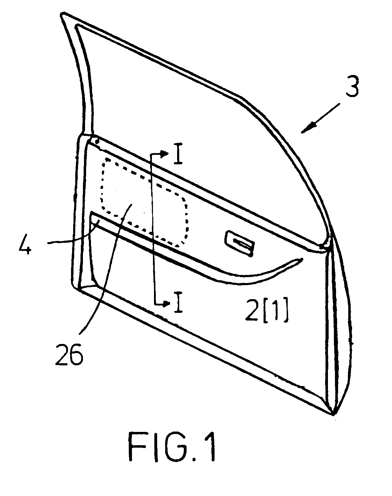

Die Erfindung ist in den Zeichnungen näher und beispielhaft erläutert. Es zeigen
- Fig. 1: eine Ansicht der Innenseite der linken Vordertür eines Personenkraftwagens und

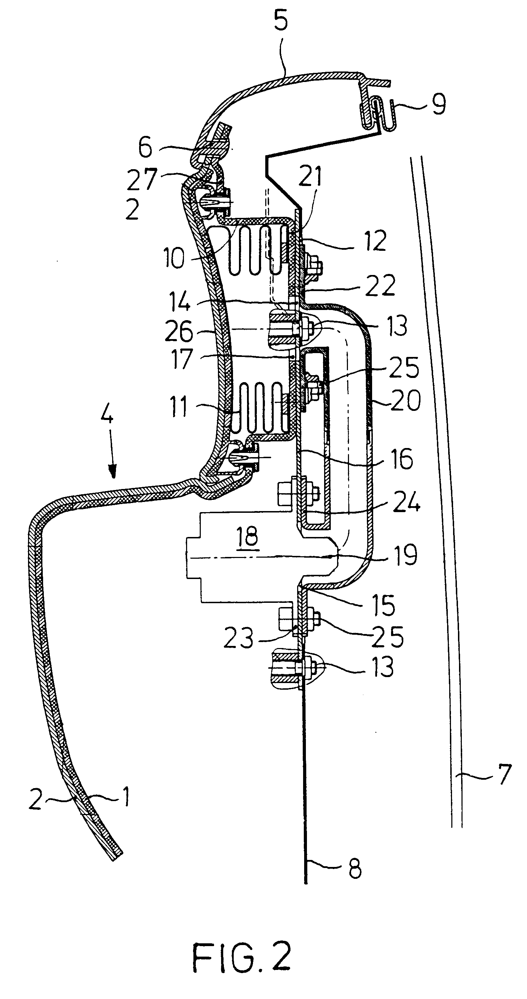

- Fig. 2: einen Querschnitt entlang der Schnittlinie I-I durch Fig. 1.

Die aus kunststoffgebundenem Faserwerkstoff geformte, insassenseitig mit einer Schaumstoffschicht (1) kaschierte Innenverkleidung (2) der linken Vordertür (3) eines Personenkraftwagens besitzt im Bereich zwischen der angeformten Armlehne (4) und der Fensterbrüstung (5), die insassenseitig mittels einer Rastverriegelung (6) am oberen Randbereich der Innenverkleidung (2) befestigt und in der Nähe der Fensterscheibe (7) in die mit dem Türinnenblech (8) verbundene U-förmige Leiste (9) eingesetzt ist, eine hutförmig ausgeformte, nach außen gerichtete Vertiefung (10) mit darin eingefaltetem Gassack (11). Im Türinnenblech (8) ist eine Durchbrechung (12) vorgesehen, vor der innenseitig eine mittels Schraubverbindungen (13) am Türinnenblech (18) befestigte und mit zwei Durchbrechungen (14), (15) versehene Trägerplatte angeordnet ist. An der Innenseite der Trägerplatte (16) sind vor der Durchbrechung (14) die im Boden der hutförmigen Vertiefung (10) befindliche Gaseintrittsöffnung (17) und vor der Durchbrechung (15) der Gasgenerator (18) mit der Gasaustrittsöffnung (19) angebracht. An der Außenseite der Trägerplatte (16) befindet sich eine die Durchbrechungen (14), (15) verbindende Gasüberströmleitung (20). Der Boden der hutförmigen Vertiefung (10), das auf dem Boden aufliegende Halteblech (21) des Gassacks (11) und der feste Flansch (22) der Gasüberströmleitung (20) im Bereich der einen Durchbrechung (14) der Trägerplatte (16) sowie der feste Flansch (23) des Gasgenerators (18) und der feste Flansch (24) der Gasüberströmleitung (20) im Bereich der anderen Durchbrechung (15) der Trägerplatte (16) haben durchgehende, jeweils mit entsprechenden Durchgangslöchern der Trägerplatte (16) korrespondierende Durchgangslöcher, in die Maschinenschrauben (25) eingespannt sind. Die hutförmige Vertiefung (10) ist mit einer mit dem Gassack (11) verbundenen Abdeckung (26), die aus dem gleichen Werkstoff wie die Innenverkleidung (2) der Vordertür (3) besteht, verschlossen und mit dem flanschförmigen Rand (27) der Vertiefung über Rastverriegelungen (28) verbunden.

Der Zusammenbau der erfindungsgemäß gestalteten Baugruppe erfolgt in der Weise, daß zunächst der Gasgenerator (18) und der gasgeneratorseitige Flansch (24) der Gasüberströmleitung (20) und dann die Innenverkleidung (2) mit dem Boden der hutförmigen Vertiefung (10) und der gassackseitige Flansch (22) der Gasüberströmleitung (20) an dem Türinnenblech (8) bzw. an der Trägerplatte (16) befestigt werden. Das so vormontierte Türinnenblech (8) wird dann in den Türrahmen eingesetzt bzw. die vormontierte Trägerplatte (16) durch Maschinenschrauben (13) mit dem die Durchbrechung (12) begrenzenden Rand des Türinnenblechs (8) verbunden.

Die mit der Erfindung erzielten Vorteile bestehen insbesondere darin, daß die Herstellung einer aus Innenverkleidung und Airbag-Einheit bestehenden Baugruppe eine schnellere Vorort-Montage erlaubt. Konzeptbedingt besteht keine Gefahr der Ablösung von Teilen der Innenverkleidung der Seitenstruktur beim Auslösen der Airbag-Einheit, da die Reaktionskräfte gegen das Türinnenblech gerichtet sind. Durch die fest mit dem Gassack verbundene Kunststoffabdeckung ist eine Druckverteilung beim Entfalten des Gassacks auf den Thorax-Bereich des Fahrzeuginsassen möglich, so daß die Gefahr von Verletzungen gering ist. In der Innenverkleidung befinden sich keine Sollreißlinien, da sich der gesamte mit dem Gassack verbundene Teil aus der Innenverkleidung herauslöst. Die Fügestellen zu den umliegenden Teilen der Innenverkleidung sind an nicht sichtbare Stellen gelegt. Eine zusätzliche Abdichtung der den Gassack enthaltenden Vertiefung gegen die Innenverkleidung ist nicht erforderlich. Da der Gassack unmittelbar in eine entsprechende Vertiefung der Türinnenverkleidung eingefaltet ist, entfällt der sonst übliche Gassackbehälter.

## Patentansprüche

1. Gassack-Aufprallschutz-Einrichtung für die Seitenstruktur eines Kraftfahrzeugs, vorzugsweise für die Seitentür (3), zum Schutz gegen einen dynamischen Seitenaufprall, deren Gassack (11) im aufgeblasenen Zustand in dem von der Seitenstruktur und dem Thorax-Bereich des unmittelbar benachbart sitzenden Fahrzeuginsassen gebildeten Zwischenraum liegt, dadurch gekennzeichnet, daß die mit dem Innenblech (8) der Seitenstruktur verbundene Innenverkleidung (2) eine hutförmig nach außen ausgeformte, den eingefalteten Gassack (11) enthaltende Vertiefung (10) mit in deren Boden angebrachter Gaseintrittsöffnung (17), die mit dem Gasgenerator (18) verbunden ist, besitzt und die Abdeckung (26) der Vertiefung an der Innenverkleidung befestigt ist.

2. Gassack-Aufprallschutz-Einrichtung nach Anspruch 1, dadurch gekennzeichnet, daß der Gasgenerator (18) an der Außenseite des Innenblechs (8) befestigt ist.

3. Gassack-Aufprallschutz-Einrichtung nach Anspruch 1, dadurch gekennzeichnet, daß der Gasgenerator (18) an der Innenseite des Innenblechs (8) befestigt ist.

4. Gassack-Aufprallschutz-Einrichtung nach den Ansprüchen 1 und 2, dadurch gekennzeichnet, daß die Gasaustrittsöffnung (19) des Gasgenerators (18) vor der Gaseintrittsöffnung (17) der Vertiefung (10) angeordnet ist.

5. Gassack-Aufprallschutz-Einrichtung nach einem der Ansprüche 1 bis 4, dadurch gekennzeichnet, daß der Gasgenerator (18) über eine Gasüberströmleitung (20) mit der Gaseintrittsöffnung (17) der Vertiefung (10) verbunden ist.

6. Gassack-Aufprallschutz-Einrichtung nach einem der Ansprüche 1 bis 5, dadurch gekennzeichnet, daß die Innenverkleidung (2) über den Boden der Vertiefung (10) mit dem Innenblech (8) verbunden ist.

7. Gassack-Aufprallschutz-Einrichtung nach einem der Ansprüche 1 bis 6, dadurch gekennzeichnet, daß die Abdeckung (26) mit dem Gassack (11) vernäht oder verklebt ist.

8. Gassack-Aufprallschutz-Einrichtung nach einem der Ansprüche 1 bis 6, dadurch gekennzeichnet, daß die Abdeckung (26) in den Gassack (11) eingespritzt ist.

9. Gassack-Aufprallschutz-Einrichtung nach einem der Ansprüche 1 bis 8, dadurch gekennzeichnet, daß die Abdeckung (26) mit dem flanschartigen Rand (27) der Vertiefung (10) durch Rastverriegelungen (28) verbunden ist.

10. Abwandlung der Gassack-Aufprallschutz-Einrichtung nach einem der Ansprüche 1 bis 9, gekennzeichnet durch eine vor einer entsprechend großen Durchbrechung (12) des Innenblechs (8) der Seitenstruktur anbringbare, mit dem Innenblech verbindbare, mit Durchbrechungen (14), (15) für den Gasstrom versehene Trägerplatte (16), an der die Innenverkleidung (2), der Gasgenerator (18) und ggf. die Gasüberströmleitung (20) befestigt sind.
